# NEUE EUROPÄISCHE PATENTSCHRIFT

(11) **EP 2 614 698 B2**
(45) Veröffentlichungstag und Bekanntmachung des Hinweises auf die Entscheidung über den Einspruch: **31.03.2021**
(45) Hinweis auf die Patenterteilung: 19.10.2016
(21) Anmeldenummer: 13000099.5
(22) Anmeldetag: 09.01.2013
(51) Int. Cl.: A01D 43/077, A01D 43/10, A01D 57/30

(54) **Mähmaschine**
Mowing machine
Faucheuse

(30) Priorität: 10.01.2012 DE 102012000301
(43) Veröffentlichungstag der Anmeldung: 17.07.2013
(60) Teilanmeldung: 16184270.3
(73) Patentinhaber: PÖTTINGER Landtechnik GmbH, 4710 Grieskirchen (AT)
(72) Erfinder: Lehner, DI Josef, 4732 St. Thomas (AT); Gadermayr, Andreas, 4751 Dorf an der Pram (AT)
(74) Vertreter: Thoma, Michael

(56) Entgegenhaltungen:
- EP-A1- 0 074 451
- EP-A1- 2 189 052
- GB-A- 1 597 276
- US-A- 2 270 471
- US-A- 2 484 981
- US-A- 3 717 981
- US-A- 4 550 554
- US-A- 5 724 797
- US-A- 5 875 623
- US-A1- 2007 186 529
- US-A1- 2010 269 475
- US-A1- 2011 005 181
- US-B1- 6 508 050
- US-B1- 6 662 539
- US-B2- 8 015 784
- MASCHINENFABRIK BERNARD KRONE GMBH: "Verkaufsbroschüre Krone BigM 2", , 2009,
- MASCHINENFABRIK BERNARD KRONE GMBH: "Ersatzteilliste, Krone BigM 2 CV/CRI", , 2010,
- Krone Broschüre BigM II

## Beschreibung

Die vorliegende Erfindung betrifft eine Mähmaschine mit zumindest einem Mähwerk sowie einem dem Mähwerk nachgeordneten Querförderer zum Querfördern des vom Mähwerk geschnittenen Ernteguts, wobei der Querförderer insbesondere eine Querförderschnecke aufweist, die um eine liegende Schneckenachse im Wesentlichen quer zur Fahrtrichtung rotatorisch antreibbar ist.

Bisweilen werden hinter Mähwerken Querförderer gefahren, um das abgemähte Erntegut nicht ausgebreitet unmittelbar hinter dem Mähwerk am Boden liegen zu lassen, sondern das Erntegut in einem Schwad seitlich neben der bemähten Spur des Mähwerks abzulegen. Insbesondere bei mehreren nebeneinander oder gestaffelt hintereinander angeordneten Mähwerken kann das Erntegut hierdurch in einem gemeinsamen Schwad abgelegt werden. Derartige Querförderer sind beispielsweise in Form von Querförderbändern bekannt, auf die das gemähte Erntegut vom Mähwerk her abgelegt wird, um quergefördert und neben dem Mähwerk am Boden abgelegt zu werden, vgl. beispielsweise DE 10 2005 050 157 A1. Zum anderen wurde bereits vorgeschlagen, als Querförderer eine Querförderschnecke zu verwenden, vgl. beispielsweise EP 1 111 985 B1 oder GB 20 88 684.

Dabei werden zwischen dem Mähwerk und dem Querförderer gelegentlich Konditionierer vorgesehen, um das abgemähte Erntegut aufzuschließen, so dass eine schnellere Trocknung des Ernteguts erreicht werden kann. Solche Konditionierer können gegenläufig umlaufende Konditionierwalzen umfassen, so dass das Erntegut zwischen ihnen hindurchgefördert und dabei gequetscht und geknickt wird. Andererseits können solche Konditionierer auch nur eine schnell laufende Schlegelwalze umfassen, deren radial abstehende Schlegel das geschnittene Erntegut anschlagen und dabei knicken und im Wurf an den Querförderer übergeben. Beispielsweise die EP 1 111 985 B1 schlägt vor, das geschnittene Erntegut mit einer Konditionierwalze aufzuschließen und auf einen oberen Sektor einer Querförderschnecke zu werfen, wobei die Querförderschnecke in derselben Richtung wie die Konditionierwalze umlaufen soll, um die dem Erntegut einmal erteilte Beschleunigung annähernd zu erhalten bzw. das Erntegut bei der Übergabe auf den Querförderer so wenig wie möglich abzubremsen.

Wenn solche Konditionierer und Querförderer zusammen verwendet werden, ist einerseits eine Bodenanpassung nicht ganz einfach zu erreichen, da der Konditionierer relativ zum Mähwerk und der Querförderer wiederum relativ zum Konditionierer in einem bestimmten Höhenfenster angeordnet werden muss, um eine Übergabe des Ernteguts sicherzustellen. Die Mähwerks-/Konditionierer-/Querförderer-Einheit bildet eine in Fahrtrichtung betrachtet recht lange Baugruppe, die beim Überfahren von Bodenwellen aufgrund der genannten Höhenversatzproblematik der einzelnen Bestandteile relativ zueinander eine Bodenanpassung nur schwierig zulässt. Zum anderen ergeben sich aufgrund der recht großen Baugruppenlänge Platzprobleme und recht große Auskraglängen, die den Anbau an einen Schlepper erschweren. Insbesondere beim Frontanbau führt dies oftmals dazu, dass keine Querförderer verwendet werden können, da bei noch beherrschbarer Auskraglänge der Platz zwischen Mähwerk und Bug des Schleppers für einen Konditionierer und einen Querförderer zu klein ist.

Aus der Schrift EP 0074451 A1 ist ein Mähwerk bekannt, bei dem als Querförderer unmittelbar hinter dem Schneidbalken eine Querförderschnecke angeordnet ist, die in zwei gegenläufig fördernde Hälften unterteilt ist und das Schnittgut zur Mitte hin zusammenführt. Hinter der genannten Querförderschnecke ist in deren mittigem Ablagebereich eine Konditionierertrommel mit umlaufenden Konditioniererzinken angeordnet.

Ferner beschreibt die Schrift US 4,550,554 eine Mähmaschine mit einem Schneidwerkzeug, das in Form einer liegend quer zur Fahrtrichtung angeordneten Schnittschnecke ausgebildet ist, deren Schneckenprofilstege sägezahnartig konturiert sind, um mit entsprechender Umlaufgeschwindigkeit das Halmgut schneiden zu können. Zusätzlich besitzt die Gerätschaft eine Querförderschnecke, die in zwei gegenläufig fördernde Hälften unterteilt ist.

Der vorliegenden Erfindung liegt die Aufgabe zugrunde, eine verbesserte Mähmaschine der genannten Art zu schaffen, die Nachteile des Standes der Technik vermeidet und Letzteren in vorteilhafter Weise weiterbildet. Vorzugsweise soll mit einer leichtgewichtigen und kleinbauenden Anordnung eine verlässliche Querförderung bei gleichzeitig ausreichendem Aufschließen und Konditionieren des Ernteguts erreicht werden.

Erfindungsgemäß wird diese Aufgabe durch eine Mähmaschine gemäß Anspruch 1 gelöst. Bevorzugte Ausgestaltungen sind Gegenstand der abhängigen Ansprüche.

Es wird vorgeschlagen, die Querförderschnecke gleichzeitig als Konditionierer und Querförderer zu verwenden. Überraschenderweise reicht die Walk-, Biege-, Knick- und Pressarbeit an den Schneckenschaufeln aus, um das Erntegut ausreichend aufzuschließen und den Trocknungsprozess in der gewünschten Weise zu beschleunigen, so dass auf separate Konditioniererwalzen zwischen Querförderer und Mähwerk verzichtet werden kann. Erfindungsgemäß wird der Querförderer unmittelbar hinter dem Mähwerk angeordnet und das gemähte Gut von dem Mähwerk direkt an den Querförderer übergeben. Das vom Mähwerk geschnittene Erntegut gelangt unbehandelt, d.h. ohne weitergehende Einwirkung eines Konditionierers direkt auf den Querförderer, der vorteilhafterweise als Querförderschnecke ausgebildet ist, welche das übergebene Erntegut im Wesentlichen quer zur Fahrtrichtung abfördert und dabei gleichzeitig aufschließt und konditioniert. Hierdurch kann gegenüber den vorbekannten Mähwerkskombinationen, die zwischen Querförderer und Mähwerk noch separate Konditioniererwalzen vorsehen, das Gesamtgewicht der Mähwerkskombination beträchtlich reduziert und der benötigte Bauraum in Fahrtrichtung betrachtet deutlich verkleinert werden, was einerseits die Bodenanpassung beispielsweise beim Überfahren von Bodenwellen erleichtert und andererseits den Anbau an einem Schlepper vereinfacht, insbesondere bei Frontanbau am Schlepper.

Erfindungsgemäß besitzt der Querförderer einen wannenförmigen Mantel,, der die Querförderschnecke umgibt und nach vorne zum Mähwerk hin eine Einlauföffnung besitzt, durch die das vom Mähwerk geschnittene Erntegut in den Innenraum des Mantels und/oder in den Förderraum zwischen Mantel und

Querförderschnecke gelangen kann. Nach der Erfindung ist der Mantel mit einer unteren Einlaufkante, die die genannte Einlauföffnung nach unten hin begrenzt, an einen die Schneidrotoren am Boden abstützenden, näherungsweise plattenförmigen Gleitkorpus anschließen, der beispielsweise als Gleitteller unter einer Schneidtrommel oder als Mähbalken ausgebildet sein kann. Insbesondere kann der genannte Mantel mit seiner unteren Einlaufkante im Wesentlichen unmittelbar bzw. direkt an eine Hinterkante des genannten plattenförmigen Gleitkorpus anschließen, so dass das geschnittene Erntegut unmittelbar in den Förderraum innerhalb des Mantels gerät und Übergabeprobleme zwischen Mähwerk und Querförderer weitestgehend vermieden werden können. Gemäß einer vorteilhaften Weiterbildung der Erfindung kann der Mantel mit seiner unteren Einlaufkante spaltfrei mit einem hinteren Endabschnitt des genannten Gleitkorpus verbunden sein. Hierdurch kann einerseits eine minimale Baulänge in Fahrtrichtung erzielt und andererseits das Erntegut ohne Übergabeverluste oder Übergabestauungen auf den Querförderer gegeben werden.

Um einen direkten, weitgehend umlenkungsfreien Einlauf des geschnittenen Ernteguts in den Querförderer zu ermöglichen, kann in Weiterbildung der Erfindung die untere Einlaufkante des Mantels des Querförderers näherungsweise auf Höhe der Schneidwerkzeuge des Mähwerks angeordnet sein. Die genannten Schneidwerkzeuge können um eine aufrechte Achse umlaufend angetriebene Schneidmesser sein. Nach der Erfindung umfasst das Mähwerk eine Mehrzahl von Schneidrotoren, die quer zur Fahrtrichtung nebeneinander liegend angeordnet sind und um jeweils aufrechte Rotorachsen umlaufen. Das Mähwerk kann dabei als Scheibenmähwerk oder als Trommelmähwerk ausgebildet sein, wobei die Querförderschnecke gerade in Kombination mit Scheibenmähwerken, bei denen auf einem Mähbalken nebeneinander umlaufende Messerscheiben angeordnet sind, eine besonders kompakte, bei der Übergabe störungsfrei arbeitende Mähwerkskombination bildet, insbesondere wenn sich die untere Einlaufkante des Mantels um die Querförderschnecke an das hintere Ende des Mähbalkens anschließt, auf dem die umlaufenden Messerscheiben gelagert sind.

Der die Querförderschnecke umgebende Mantel kann in Weiterbildung der Erfindung eine Halbschale bilden, die in Umfangsrichtung betrachtet die Querförderschnecke über einen Winkelbereich von etwa 3/4 π bis 5/4 π umschließt, wobei der halbschalenförmige Mantel sich in Weiterbildung der Erfindung in einem hinteren unteren und einem hinteren oberen Quadranten um die Querförderschnecke herum erstrecken kann. Insbesondere kann sich der halbschalenförmige Mantel um die Querförderschnecke herum in einem Bereich erstrecken, der - bei Anordnung des Mähwerks auf der 9 Uhr-Seite der Querförderschnecke - bei etwa 6 bis 8 Uhr beginnt und bei etwa 12 Uhr bis 3 Uhr endet. Je nach zu bearbeitendem Erntegut kann es auch sinnvoll sein, den schalenförmigen Mantel breiter oder schmäler auszubilden, d.h. die Querförderschnecke über einen größeren oder einen kleineren Winkelbereich in Umfangsrichtung zu umschließen. Die vorgenannte Erstreckung bzw. Ausbildung des Mantels bildet jedoch einen vorteilhaften Kompromiss für eine Vielzahl verschiedener Erntegüter.

In Weiterbildung der Erfindung kann der Mantel dabei derart geformt sein, dass in Umfangsrichtung betrachtet ein etwa gleich bleibendes Spaltmaß zwischen der Querförderschnecke und der Innenmantelfläche des umschließenden Mantels vorgesehen ist. Insbesondere kann zwischen der Querförderschnecke und dem Mantel im Bereich von etwa 7 Uhr bis 2 Uhr - diese Maßangabe gilt dann, wenn die Blickrichtung so gewählt ist, dass das Mähwerk auf der 9 Uhr-Seite angeordnet ist - ein etwa gleich bleibendes Spaltmaß vorliegen, welches sich bis zu dem Einlaufbereich hin erstrecken kann. Insbesondere kann der Querförderer auf eine Aufweitung des Mantels bzw. des zwischen Mantel und Querförderschnecke vorgesehenen Förderraums im Bereich des Einlaufs, in dem das geschnittene Erntegut an den Querförderer gegeben wird, verzichten, so dass es beim Einlauf des Ernteguts in den Querförderer zu einer relativ starken Konditionierwirkung kommt und das geschnittene Erntegut ausreichend aufgeschlossen wird, wenn es mit der Wendel der Querförderschnecke in Eingriff gelangt und von dieser in den Förderspalt zwischen Mantel und Querförderschnecke gezogen bzw. gedrückt wird.

Nach der Erfindung besitzt die Querförderschnecke eine Drehrichtung, bei der sich ein fiktiver Punkt auf der Querförderschnecke von oben nach vorne nach unten dreht, so dass das geschnittene Erntegut an der unteren Einlaufkante des Mantels zwischen den Mantel und die Querförderschnecke gezogen bzw. gedrückt wird.

Im Gegensatz zu den aus dem Stand der Technik bekannten Anordnungen kann vorteilhafterweise der vordere, untere Quadrant der Querförderschnecke als Einlaufbereich dienen, in dem das geschnittene Erntegut auf die Querförderschnecke gelangt bzw. zwischen Querförderschnecke und Mantel eingezogen wird. Hierdurch kann bei problemloser Übergabe des Ernteguts eine ausreichende Konditionierwirkung erreicht werden.

Um die Konditionierwirkung im Förderbereich zwischen Mantel und Förderschnecke zu verstärken und gleichzeitig eine verlässliche Querförderwirkung zu erzielen, besitzt erfindungsgemäß der Mantel eine an seiner Innenmantelfläche vorspringende Abstreiferleiste, die sich näherungsweise in Längsrichtung durch den Förderkanal zwischen Querförderschnecke und Innenmantelfläche erstreckt. Vorteilhafterweise können hierbei mehrere solche Abstreiferleisten vorgesehen sein, die in Umfangsrichtung voneinander beabstandet sich in Längsrichtung durch den genannten Förderraum hindurch erstrecken, wobei die mehreren Abstreiferleisten parallel zueinander angeordnet sein können. Die genannten Abstreiferleisten können hierbei parallel zur Schneckenachse verlaufen, oder leicht schräg gegenüber der Schneckenachse angestellt verlaufen, so dass sie sich leicht wendelförmig durch den Förderraum bzw. -spalt zwischen Innenmantelfläche des Mantels und Querförderschnecke hindurch erstrecken. An diesen Abstreiferleisten arbeitet sich das geschnittene Erntegut während der Querförderung zusätzlich ab, so dass es zu einem verstärkten Aufschließen und damit zur gewünschten Konditionierwirkung kommt. Hiervon abgesehen unterstützen die genannten Abstreiferleisten die Querförderwirkung.

Um einerseits eine kleinbauenden Anordnung mit exakter Relativpositionierung des Querförderers zum Mähwerk zu erreichen, andererseits aber auch einen Betrieb ohne Querförderer zu ermöglichen, beispielsweise um nicht im Schwad, sondern gestreut abzulegen, kann in Weiterbildung der Erfindung der Querförderer eine vom Mähwerk separate Baugruppe bilden, die lösbar am Tragrahmen des Mähwerks befestigt sein kann, insbesondere zusammen mit dem Mähwerk um eine liegende, in Fahrtrichtung weisende Tragarmachse pendelnd aufgehängt sein kann. In Weiterbildung der Erfindung können hierbei zwischen dem Mähwerk bzw. dessen Tragrahmen und dem Querförderer Schnellverbinder beispielsweise in Form einer Steckverbindung und/oder einer Schnellkupplung, vorgesehen sein, um eine leichte Demontage bzw. Montage zu ermöglichen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf eine Mähmaschine nach einer vorteilhaften Ausführung der Erfindung, die als Front- und Heckmähwerkskombination, die an einen Schlepper anbaubar ist, ausgebildet ist, wobei die beiden hinteren, seitlichen Mähwerke jeweils mit einer Querförderschnecke versehen sind,
- Fig. 2:: eine perspektivische Ansicht einer Mähwerks-/Querfördererkombination der Mähmaschine aus Fig. 1 aus einer Blickrichtung schräg von vorne,
- Fig. 3:: eine perspektivische Ansicht der Mähwerks-/Querfördererkombination aus einem Blickwinkel schräg von oben/hinten,
- Fig. 4:: eine Draufsicht auf die Mähwerks-/Querfördererkombination aus den vorhergehenden Figuren,
- Fig. 5:: eine Frontansicht der Mähwerks-/Querfördererkombination aus den vorhergehenden Figuren in einer Blickrichtung entgegen der Fahrtrichtung, und
- Fig. 6:: eine Seitenansicht der Mähwerks-/Querfördererkombination aus den vorhergehenden Figuren.

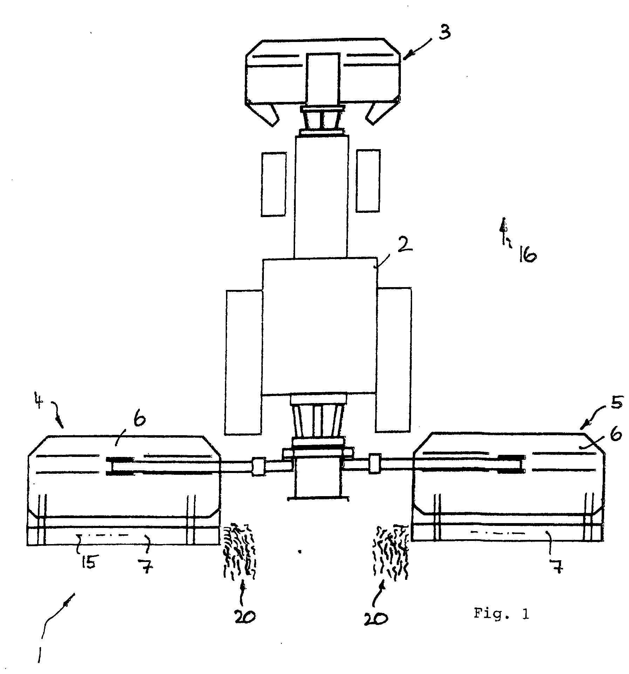

Wie Fig. 1 zeigt, kann die Mähmaschine 1 mehrere Mähwerkseinheiten umfassen, die an einen Schlepper 2 angebaut werden können, wobei die in Fig. 1 gezeichnete Ausführungsform eine Frontmähwerkseinheit 3 sowie zwei Heckmähwerkseinheiten 4 und 5 aufweist, die zueinander mit Versatz, hinsichtlich ihrer Mähbreite jedoch leicht überlappend angeordnet sind und einander ergänzen. Die Frontmähwerkseinheit 3 ist mittig am Schlepper 2 positioniert, während die beiden Heckmähwerkseinheiten 4 und 5 seitlich auskragend neben dem Schlepper 2 positioniert sind.

Die beiden Heckmähwerkseinheiten 4 und 5 können jeweils mit einem Querförderer 7 versehen sein, um das mit den Heckmähwerkseinheiten 4 und 5 gemähte Erntegut quer versetzt, insbesondere zur Mitte hin seitlich neben der jeweiligen Mähwerkseinheit in einem Schwad 20 ablegen zu können, so dass sich beispielsweise das gemähte Erntegut von allen drei Mähwerkseinheiten 3, 4 und 5 in einem gemeinsamen Mittelschwad ablegen lässt. Es können jedoch auch andere Konfigurationen sinnvoll sein, wobei auch die Frontmähwerkseinheit 3 mit einem solchen Querförderer versehen sein kann, um dann beispielsweise geschnittenes Erntegut aus mehreren Fahrgassen in 2-er oder 3-er-Schwaden zusammenzulegen.

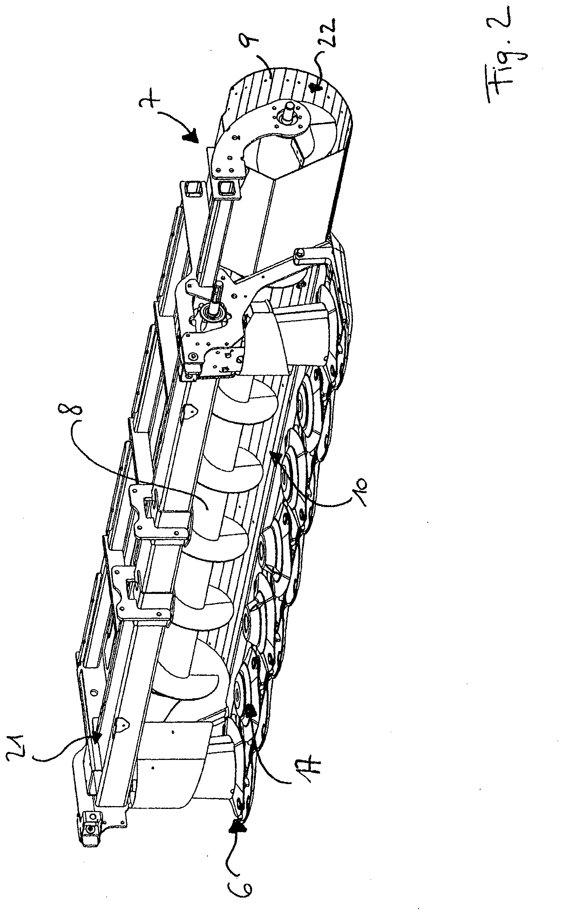

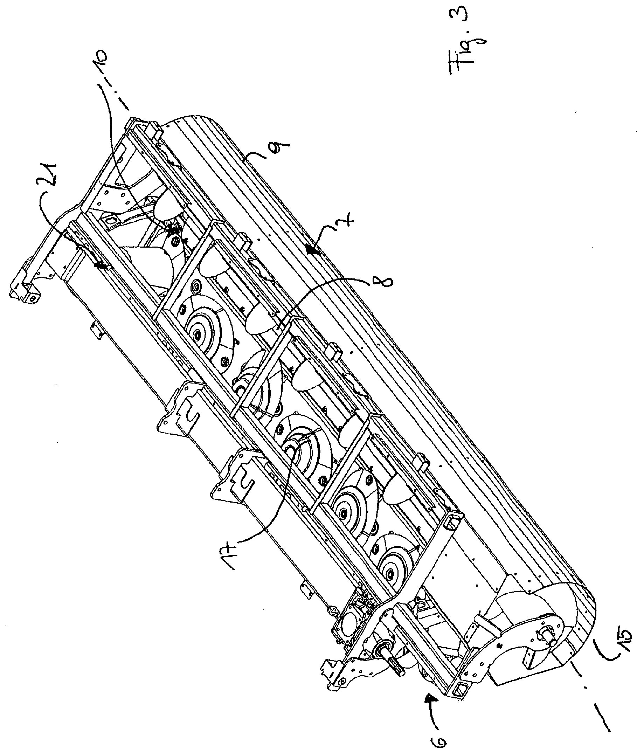

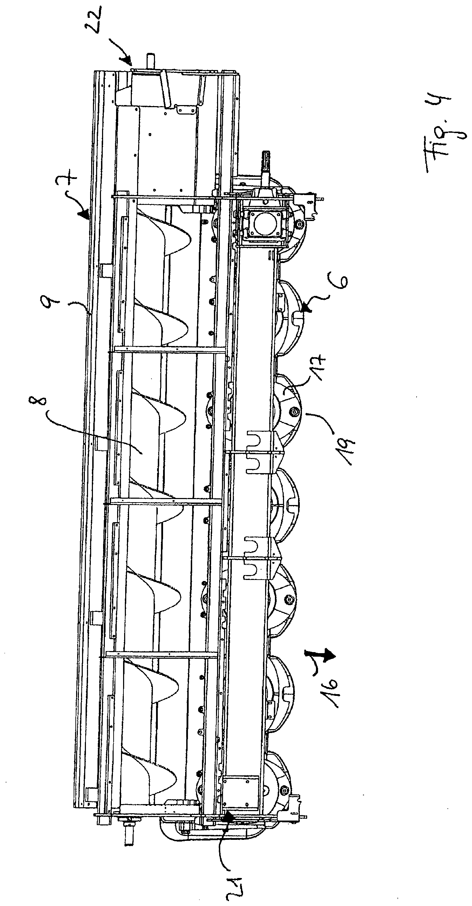

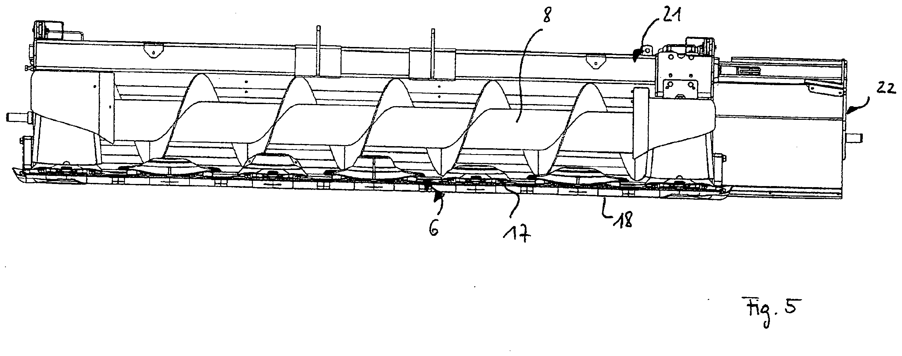

Wie die Figuren 2 bis 6 zeigen, umfasst jede der genannten Mähwerkseinheiten ein Mähwerk 6, welches mehrere nebeneinander angeordnete Schneidrotoren 17 besitzt, die jeweils um eine aufrechte Rotorachse rotatorisch angetrieben werden können, so dass die umlaufenden Schneidwerkzeuge 19 der Schneidrotoren 17 das Erntegut bodennah abschneiden. Die genannten Schneidrotoren 17 können hierbei, wie in den Figuren gezeigt, scheibenförmig ausgebildet sein und auf einem sich quer zur Fahrtrichtung erstreckenden, näherungsweise plattenförmigen Gleitkorpus 18 in Form eines Mähbalkens angeordnet sein, der die genannten Schneidrotoren 17 vor Bodenkontakt schützt und gegenüber diesem abstützt. Der genannte Mähbalken kann zusammen mit dem Schneidrotoren 17 an einem Mähwerksrahmen 21 aufgehängt sein, welcher wiederum an einer Anbauvorrichtung gelagert ist, durch die das jeweilige Mähwerk 6 am Schlepper 2 angebaut werden kann. Beispielsweise kann der genannte Mähwerksrahmen 21 um eine liegende, in Fahrtrichtung weisende Achse pendelnd an einem Tragarm aufgehängt sein, wie dies Fig. 1 zeigt.

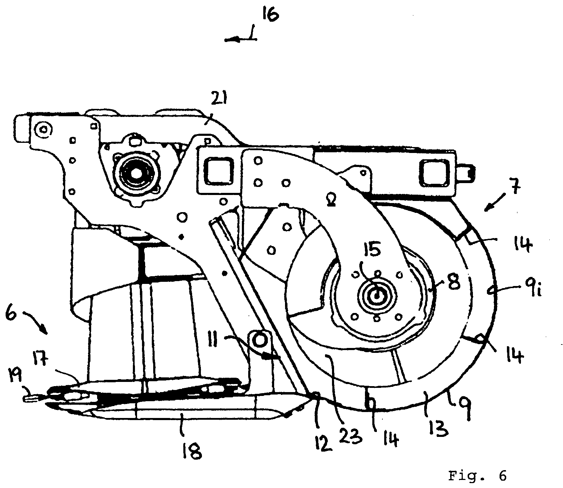

In Fahrtrichtung betrachtet unmittelbar hinter dem Mähwerk 6 ist ein Querförderer 7 angeordnet, der aus einer Querförderschnecke 8 besteht, die umfangsseitig durch einen zylindrisch ausgebildeten Mantel 9 umschlossen ist. Die genannte Querförderschnecke 8 ist um eine Schneckenachse 15 rotatorisch antreibbar, die sich liegend quer zur Fahrtrichtung 16 erstreckt. Wie Fig. 6 zeigt, ist die genannte Querförderschnecke 8 hierbei höhenmäßig so angeordnet, dass ein unten liegender Sektor der Querförderschnecke 8 etwa auf der Höhe der Schneidwerkzeuge 19 des Mähwerks 6 angeordnet ist, wobei sich die genannte Querförderschnecke 8 näherungsweise parallel zur Längserstreckung des Mähbalkens erstreckt, entlang dem die Schneidrotoren 17 nebeneinander angeordnet sind.

Die Querförderschnecke 8 kann in an sich bekannter Weise eine Förderwendel aufweisen, die sich schraubenlinienförmig um einen zylindrischen Kernkorpus der Querförderschnecke 8 herum erstreckt.

Der die Querförderschnecke 8 zumindest abschnittsweise umschließende Mantel 9 ist an einer Vorderseite der Querförderschnecke 8, d.h. einer dem Mähwerk 6 zugewandten Seite der Querförderschnecke 8 offen ausgebildet, damit über die hierdurch ausgebildete Einlauföffnung 10 des Mantels 9 vom Mähwerk 6 her kommendes geschnittenes Erntegut in den Förderbereich der Querförderschnecke 8 gelangen kann. Wie die Figuren 2, 3 und 5 zeigen, erstreckt sich die genannte Einlauföffnung 10 im Wesentlichen über die gesamte Breite des Mähwerks 6 und öffnet im Wesentlichen die gesamte Vorderseite der Querförderschnecke 8 zum Mähwerk 6 hin, so dass hier das Erntegut an die Querförderschnecke 8 gegeben werden kann. Die Querförderschnecke 8 selbst erstreckt sich breitenmäßig über das Mähwerk 6 seitlich hinaus, wobei der seitlich über das Mähwerk 6 auskragende Bereich von dem Mantel 9 auch vorderseitig umschlossen ist, vgl. Fig. 2. Am über das Mähwerk 6 hinauskragenden Ende besitzt der Mantel 9 bzw. der Querförderer 7 eine Ablegeöffnung, um das quergeförderte Erntegut seitlich neben dem Mähwerk 6 am Boden abzulegen, vgl. Fig. 1. Die genannte Ablegeöffnung 22 wird durch den offenen Endquerschnitt des Mantels 9 gebildet, vgl. Fig. 2.

Wie Fig. 6 zeigt, schließt der Mantel 9 des Querförderers 7 mit einer unteren Einlaufkante 12, die die genannte Einlauföffnung 10 an deren unteren Ende begrenzt, im Wesentlichen unmittelbar an einen hinteren Endabschnitt des Gleitkorpus 18 in Form des Mähbalkens an, wobei die genannte Einlaufkante 12 etwa auf Höhe der Schneidwerkzeuge 19 der Schneidrotoren 17 angeordnet ist. Die genannte Einlaufkante 12 befindet sich hierbei näherungsweise bei etwa 7 Uhr der Querförderschnecke 8, wenn die Blickrichtung so gewählt ist, dass das Mähwerk 6 auf der 9 Uhr-Seite der Querförderschnecke 8 liegt, vgl. Fig. 6. Der Mantel 9 erstreckt sich von der genannten Einlaufkante 12 ausgehend umfangsseitig um die hinteren Quadranten der Querförderschnecke 8 herum bis zu einem Bereich um etwa 1 Uhr herum, so dass der Mantel 9 insgesamt etwa halbschalenförmig ausgebildet ist. Zwischen der Innenumfangsseite 9i des Mantels 9 und der Querförderschnecke 8 ist ein halbringförmiger Förderspalt 13 ausgebildet, dessen Spaltmaß in Umfangsrichtung betrachtet näherungsweise gleichbleibend gewählt ist, vgl. Fig. 6.

In dem genannten Förderspalt 13 erstrecken sich mehrere parallel zueinander angeordnete Abstreiferleisten 14, die von der Innenmantelfläche 9i des Mantels 9 vorspringend angeordnet sind, wobei sich die genannten Abstreiferleisten 14 vorteilhafterweise parallel zur Schneckenachse 15 erstrecken können. Die genannten Abstreiferleisten 14 können sich von der Innenmantelfläche 9i des Mantels 9 radial nach innen bis hin zur Außenkante der Förderwendel der Querförderschnecke 8 erstrecken und somit eine Höhe besitzen, die im Wesentlichen dem Förderspalt 13 entspricht.

Durch die in Fig. 6 gezeigte höhenmäßige Anordnung der Querförderschnecke 8 unmittelbar hinter dem Mähwerk 6 bildet ein vorderer unterer Quadrant 23 der Querförderschnecke 8, der sich von etwa 9 Uhr bis etwa 6 Uhr erstreckt, den Einlaufbereich 11 der Querförderschnecke 8, in dem das geschnittene Erntegut vom Mähwerk 6 her kommend gegen die Querförderschnecke 8 geworfen bzw. gedrückt wird. Nach der Erfindung besitzt die Querförderschnecke 8 eine Drehrichtung, die die dem Mähwerk 6 zugewandte Vorderseite der Querförderschnecke 8 nach unten laufen lässt - gemäß Fig. 6 also entgegen dem Uhrzeigersinn. Ein fiktiver Punkt auf der Querförderschnecke 8 läuft von deren Oberseite nach vorne und sodann nach unten. Dementsprechend gelangt das geschnittene Erntegut am unteren Öffnungsbereich des Mantels 9 an der Einlaufkante 12 zwischen die Querförderschnecke 8 und die Innenmantelfläche des Mantels 9 und wird in dem Förderspalt 13 durch die Förderbewegung der Querförderschnecke 8 quer zur Fahrtrichtung 16 weggefördert. Die Abstreiferleisten 14 unterstützen hierbei die Axialbewegung des Ernteguts und helfen zusätzlich bei der gewünschten Konditionierung des Ernteguts, da sich das Erntegut an den genannten Abstreiferleisten 14 zusätzlich abarbeitet. Wie Fig. 6 zeigt, können die Abstreiferleisten 14 vorteilhafterweise gleichmäßig beabstandet über den vom Mantel 9 umschlossenen Umfangsbereich der Querförderschnecke 8 verteilt angeordnet sein.

Der Querförderer 7 bildet vorteilhafterweise eine demontierbare Baugruppe, die am Mähwerksrahmen 21 des Mähwerks 6 lösbar befestigt werden kann. Hierdurch kann einerseits eine sehr kompakte Anordnung erzielt werden, andererseits wird eine exakte Höhenpositionierung des Querförderers 7 relativ zum Mähwerk 6 erreicht, die eine problemlose Übergabe des Ernteguts sicherstellt. Um eine einfache Montage bzw. Demontage zu erzielen, können zwischen dem Querförderer 7 und dem Mähwerk 6 vorteilhafterweise werkzeuglos bedienbare Schnellverbindungsmittel vorgesehen sein. Dementsprechend kann das Mähwerk 6 wahlweise mit oder ohne nachgeordnetem Querförderer 7 betrieben werden.

## Patentansprüche

1. Mähmaschine mit zumindest einem Mähwerk (6) sowie
einem dem Mähwerk (6) nachgeordneten Querförderer (7),
wobei der Querförderer (7) eine Querförderschnecke (8) aufweist, die um eine liegende Schneckenachse (15) quer zur Fahrtrichtung (16) rotatorisch antreibbar ist,
wobei die Querförderschnecke (8) unmittelbar hinter dem Mähwerk (6) angeordnet ist und das Mähwerk (6) das gemähte Erntegut direkt an die Querförderschnecke (8) übergibt,
wobei die Querförderschnecke (8) von einem wannenförmigen Mantel (9) umgeben ist, der nach vorne zum Mähwerk (6) hin eine Einlauföffnung (10) besitzt und zwischen seiner Innenmantelfläche (9i) und der Querförderschnecke (8) einen Förderspalt (13) begrenzt,
**dadurch gekennzeichnet, dass**
der Mantel (9) des Querförderers (7) zumindest eine an seiner Innenmantelfläche (9i) vorspringende Abstreiferleiste (14) besitzt, die sich parallel zu oder leicht wendelförmig, leicht schräg angestellt zu der Schneckenachse (15) zwischen Querförderschnecke (8) und Mantel (9) erstreckt, wobei
das Mähwerk eine Mehrzahl von Schneidrotoren umfasst, die quer zur Fahrtrichtung nebeneinander liegend angeordnet sind und um jeweils aufrechte Rotorachsen umlaufen,
der Mantel (9) mit einer unteren Einlaufkante (12) an einen die Schneidrotoren (17) des Mähwerks (6) am Boden abstützenden, etwa plattenförmigen Gleitkorpus (18) anschließt, und
die Querförderschnecke (8) eine Drehrichtung besitzt, gemäß der sich ein Punkt auf der Querförderschnecke (8) von oben nach vorne nach unten dreht, so dass das geschnittene Erntegut an der unteren Einlaufkante (12) des Mantels (9) zwischen den Mantel (9) und die Querförderschnecke (8) gezwungen wird.

2. Mähmaschine nach dem vorhergehenden Anspruch, wobei der etwa plattenförmigen Gleitkorpus (18), ein Gleitteller oder ein Mähbalken ist.

3. Mähmaschine nach dem vorhergehenden Anspruch, wobei die untere Einlaufkante (12) spaltfrei mit dem Gleitkorpus (18) verbunden ist und/oder unmittelbar an den Gleitkorpus (18) angrenzt.

4. Mähmaschine nach einem der beiden vorhergehenden Ansprüche, wobei die untere Einlaufkante (12) des Mantels (9) etwa auf Höhe der Schneidwerkzeuge (19) des Mähwerks (6) angeordnet ist.

5. Mähmaschine nach einem der vorhergehenden Ansprüche, wobei der Mantel (9) des Querförderers (7) eine Halbschale bildet, die in Umfangsrichtung betrachtet die Querförderschnecke (8) über einen Winkelbereich von etwa 3/4 π bis 5/4 π umschließt, vorzugsweise in einem Bereich, der bei etwa 6 bis 8 Uhr beginnt und bei etwa 12 bis 3 Uhr endet.

6. Mähmaschine nach einem der vorhergehenden Ansprüche, wobei der Mantel (9) des Querförderers (7) derart geformt ist, dass in Umfangsrichtung betrachtet ein etwa gleich bleibendes Spaltmaß zwischen dem Mantel (9) und der Querförderschnecke (8) vorgesehen ist, wobei der Mantel (9) vorzugsweise kreiszylindrisch ausgebildet ist.

7. Mähmaschine nach einem der vorhergehenden Ansprüche, wobei das geschnittene Erntegut von dem Mähwerk (6) an den Querförderer (7) in einem Einlaufbereich (11) der Querförderschnecke (8) übergeben wird, der in einem unteren, vorderen, dem Mähwerk (6) zugewandten Quadranten der Querförderschnecke (8) liegt.

8. Mähmaschine nach einem der vorhergehenden Ansprüche, wobei der Mantel (9) des Querförderers (7) mehrere zueinander parallele Abstreiferleisten (14) besitzt.

9. Mähmaschine nach einem der vorhergehenden Ansprüche, wobei der Querförderer (7) eine separate Baugruppe bildet, die lösbar am Rahmen des Mähwerks (6) befestigt ist, vorzugsweise mittels Schnellverbindermitteln montierbar/demontierbar ist.

## Claims

1. A reaping machine having at least one cutting bar (6) and
having a transverse conveyor (7) arranged downstream of the cutting bar (6), wherein the transverse conveyor (7) has a transverse conveyor screw (8) which can be rotationally driven about a horizontal screw axis (15) transversely to the direction of travel (16);
wherein the transverse conveyor screw (8) is arranged directly behind the cutting bar (6) and the cutting bar (6) transfers the reaped crop directly to the transverse conveyor screw (8); wherein the transverse conveyor screw (8) is surrounded by a trough-like jacket (9) which has an inlet opening (10) to the front toward the cutting bar (6) and bounds a conveying gap (13) between its inner jacket surface (9i) and the transverse conveyor screw (8),
**characterized in that**
the jacket (9) of the transverse conveyor (7) has at least one scraper rail (14) which projects at its inner jacket surface (9i) and which extends in parallel with or slightly spirally and angled slightly obliquely to the screw axis (15) between the transverse conveyor screw (8) and the jacket (9), with the cutting bar comprising a plurality of cutting rotors which are arranged lying next to one another transversely to the direction of travel and which revolve about respective upright rotor axes;
a lower inlet edge (12) of the jacket (9) adjoining an approximately plate-shaped sliding body (18) supporting the cutting rotors (17) of the cutting bar (6) on the ground; and
the transverse conveyor screw (8) having a direction of rotation in accordance with which a point on the transverse conveyor screw (8) rotates from top to the front to the bottom such that the cut crop is forced between the jacket (9) and the transverse conveyor screw (8) at the lower inlet edge (12) of the jacket (9).

2. A reaping machine in accordance with the preceding claim, wherein the approximately plate-shaped sliding body (18 is a sliding plate or a cutting sickle.

3. A reaping machine in accordance with the preceding claim, wherein
the lower inlet edge (12) is connected in a gap-free manner to the sliding body (18) and/or directly adjoins the sliding body (18).

4. A reaping machine in accordance with one of the two preceding claims,
wherein the lower inlet edge (12) of the jacket (9) is arranged approximately at the height of the cutting tools (19) of the cutting bar (6).

5. A reaping machine in accordance with one of the preceding claims, wherein the jacket (9) of the transverse conveyor (7) forms a half-shell which, viewed in the peripheral direction, surrounds the transverse conveyor screw (8) over an angular region of approximately 3/4 π to 5/4 π, preferably in a region which starts approximately at 6 to 8 o'clock and ends at approximately 12 to 3 o'clock.

6. A reaping machine in accordance with one of the preceding claims, wherein the jacket (9) of the transverse conveyor (7) is shaped such that, viewed in the peripheral direction, an approximately unchanging clearance is provided between the jacket (9) and the transverse conveyor screw (8), with the jacket (9) preferably being circular cylindrical.

7. A reaping machine in accordance with one of the preceding claims, wherein the cut crop is transferred from the cutting bar (6) to the transverse conveyor (7) in an inlet region (11) of the transverse conveyor screw (8) which is disposed in a lower, front quadrant of the transverse conveyor screw (8) facing the cutting bar (6).

8. A reaping machine in accordance with one of the preceding claims, wherein the jacket (9) of the transverse conveyor (7) has a plurality of mutually parallel scraper rails (14).

9. A reaping machine in accordance with one of the preceding claims, wherein the transverse conveyor (7) forms a separate assembly which is releasably fastened to the frame of the cutting bar (6) and can preferably be installed/dismantled by means of quick-connector means.

## Revendications

1. Faucheuse comprenant au moins un mécanisme de coupe (6) ainsi que
un transporteur transversal (7) en aval du mécanisme de coupe (6),
le transporteur transversal (7) comportant une vis sans fin transversale (8), qui peut être entraînée en rotation sur un axe de vis sans fin horizontal (15) transversalement au sens de la marche (16),
la vis sans fin transversale (8) étant disposée directement derrière le mécanisme de coupe (6) et le mécanisme de coupe (6) transmettant la récolte fauchée directement à la vis sans fin transversale (8),
la vis sans fin transversale (8) étant entourée d'une enveloppe (9) en forme de cuve, qui possède une ouverture d'entrée (10) tournée vers l'avant vers le mécanisme de coupe (6) et qui limite une fente de transport (13) entre sa surface intérieure d'enveloppe (9i) et la vis sans fin transversale (8),
**caractérisée en ce que**
l'enveloppe (9) du transporteur transversal (7) possède au moins une lame racleuse (14) dépassant sur sa surface intérieure d'enveloppe (9i), qui s'étend entre la vis sans fin transversale (8) et l'enveloppe (9) parallèlement à l'axe de vis sans fin (15) ou légèrement de manière hélicoïdale placée légèrement en oblique par rapport à celui-ci, dans laquelle
le mécanisme de coupe comprend une pluralité de rotors de coupe (17), qui sont disposés les uns à côté des autres transversalement au sens de la marche et qui tournent autour d'axes de rotor respectivement verticaux, l'enveloppe (9) touche par une arête d'entrée inférieure (12) un corps de glissement (18) approximativement en forme de plaque, qui soutient les rotors de coupe (17) du mécanisme de coupe (6) sur le sol, et
la vis sans fin transversale (8) possède un sens de rotation, selon lequel un point de la vis sans fin transversale (8) tourne du haut vers l'avant vers le bas, de telle sorte que la récolte coupée est forcée à passer entre l'enveloppe (9) et la vis sans fin transversale (8) au niveau de l'arête d'entrée inférieure (12) de l'enveloppe (9).

2. Faucheuse selon la revendication précédente, dans laquelle le corps de glissement (18) approximativement en forme de plaque est un plateau de glissement ou une barre de coupe.

3. Faucheuse selon la revendication précédente, dans laquelle l'arête d'entrée inférieure (12) est reliée sans jeu au corps de glissement (18) et/ou elle est directement adjacente au corps de glissement (18).

4. Faucheuse selon l'une des deux revendications précédentes, dans laquelle l'arête d'entrée inférieure (12) de l'enveloppe (9) est disposée approximativement à la hauteur des outils de coupe (19) du mécanisme de coupe (6).

5. Faucheuse selon l'une des revendications précédentes, dans laquelle l'enveloppe (9) du transporteur transversal (7) forme une demi-coque, qui, vue dans le sens circonférentiel, entoure la vis sans fin transversale (8) sur une plage angulaire d'environ 3/4 π à 5/4 π, de préférence dans une plage qui commence entre environ 6 et 8 heures et se termine entre environ 12 et 3 heures.

6. Faucheuse selon l'une des revendications précédentes, dans laquelle l'enveloppe (9) du transporteur transversal (7) est formée de telle manière que, vue dans le sens circonférentiel, une mesure de fente approximativement constante est prévue entre l'enveloppe (9) et la vis sans fin transversale (8), l'enveloppe (9) étant réalisée de préférence de forme cylindrique circulaire.

7. Faucheuse selon l'une des revendications précédentes, dans laquelle la récolte coupée est transmise du mécanisme de coupe (6) au transporteur transversal (7) dans une zone d'entrée (11) de la vis sans fin transversale (8), qui se trouve dans un quart de cercle inférieur avant, tourné vers le mécanisme de coupe (6), de la vis sans fin transversale (8).

8. Faucheuse selon l'une des revendications précédentes, dans laquelle l'enveloppe (9) du transporteur transversal (7) possède plusieurs lames racleuses (14) parallèles entre elles.

9. Faucheuse selon l'une des revendications précédentes, dans laquelle le transporteur transversal (7) forme un ensemble séparé, qui est fixé de manière amovible au cadre du mécanisme de coupe (6), et qui peut être monté/démonté de préférence à l'aide de moyens de raccord rapide.
